# EUROPÄISCHE PATENTSCHRIFT

(11) **EP 2 919 348 B1**
(45) Veröffentlichungstag und Bekanntmachung des Hinweises auf die Patenterteilung: **12.07.2017**
(21) Anmeldenummer: 15156934.0
(22) Anmeldetag: 27.02.2015
(51) Int. Cl.: H02H 11/00, H02B 1/24, H02B 15/02, H02B 13/00, H02B 13/025, H02B 11/133

(54) **Schaltanlage**
Switchgear
Installation de commutation

(30) Priorität: 11.03.2014 DE 102014103230
(43) Veröffentlichungstag der Anmeldung: 16.09.2015
(73) Patentinhaber: Fritz Driescher KG Spezialfabrik für Elektrizitätswerksbedarf GmbH & Co., D-41844 Wegberg (DE)
(72) Erfinder: Bünger, Stefan, 41812 Erkelenz (DE); Bernards, Stefan, 41363 Jüchen (DE); Hecker, Carsten, 52441 Linnich (DE)
(74) Vertreter: Lenzing Gerber Stute

(56) Entgegenhaltungen:
- WO-A1-98/44610
- DE-A1- 19 630 614
- "Protection & Control Catalogue, MiCOM C434 Bay Unit for Control and Monitoring", 20010101, 1. Januar 2001 (2001-01-01), Seiten 2-19, XP002505596,

## Beschreibung

Die vorliegende Erfindung betrifft eine Schaltanlage, insbesondere eine Mittelspannungsschaltanlage, mit Mitteln zu deren Bedienung für eine Bedienperson vor Ort gemäß dem Oberbegriff des Anspruch 1.

Für die Bedienung von Mittelspannungsschaltanlagen muss die Bedienperson eine entsprechende Ausbildung haben (Elektrofachkraft etc.), da bei einer Fehlbedienung Gefahren für das Mittelspannungsnetz bestehen. Werden Schalter einer Mittelspannungsschaltanlage in verkehrter Reihenfolge geschaltet, können Kurzschlüsse entstehen, die zu einer Beschädigung oder Zerstörung der Schaltanlage und auch zu Fehlern im Mittelspannungsnetz führen.

Um mögliche Fehlbedienungen einer Mittelspannungsschaltanlage auszuschließen, wird ein erheblicher mechanischer Aufwand betrieben, vor allem um eine ordnungsgemäße Reihenfolge von Bedienungsschritten sicherzustellen.

Um beispielsweise bei einer von der Anmelderin angebotenen, mit Erdungsschaltern und Lästtrennschaltern ausgerüsteten Mittelspannungsschaltanlage zu verhindern, dass ein Erdungsschalter von einer Bedienperson zu einem Zeitpunkt geschaltet wird, zu dem die Anlage noch nicht vom Netz freigeschaltet ist, weil der Lasttrennschalter geschlossen ist, ist ein Verriegelungsblech vorgesehen, das das Einführen einer Schaltkurbel zum manuellen Betätigen des Erdungsschalters bei geschlossenem Lasttrenn- oder Leistungsschalter verhindert. Sind der Erdungsschalter geschlossen und der Lasttrennschalter offen, wird das Einführen einer Schaltkurbel zum manuellen Einschalten des Lasttrennschalters ebenso durch ein Verriegelungsblech verhindert. Ist innerhalb der Schaltanlage ein Störlichtbogen aufgetreten und infolge dessen ein Kurzschließer und/oder ein Erdungsschalter ausgelöst, wird eine manuelle Betätigung aller Schalter durch Verriegelungsbleche, die das Einführen von Schaltkurbeln verhindern, ausgeschlossen.

Aus der DE 10 2006 041 366 B3 ist eine Verriegelungsvorrichtung für eine Schaltanlage zum Sperren bzw. Freigeben eines Erdungsschaltantriebes in Abhängigkeit von der Betriebs- bzw. Trennposition eines Leistungsschalters bekannt, die eine mit einer Schlitzöffnung versehene Verriegelungshülse zur Aufnahme der Kupplung des Erdungsschaltantriebs sowie einen über die Schlitzöffnung in die Verriegelungshülse eingreifenden, schwenkbar gelagerten Verriegelungshebel aufweist, der in der Betriebsposition des Leistungsschalters zum Sperren des Erdungsschaltantriebs unter Federwirkung in der Verriegelungshülse gehalten ist und erst bei Erreichen der Trennposition durch mechanische Einwirkung auf das freie Ende eines an den Verriegelungshebel angelenkten Aktivierungsschiebers und des dadurch bedingten Herausschwenken des Verriegelungshebels aus der Schlitzöffnung den Zugang zum Erdungsschaltantrieb freigibt.

Die Mechanik zum Betätigen der Verriegelungsbleche in Abhängigkeit von den einzelnen Schaltzuständen der Schaltanlage und vom Betriebszustand der Anlage ist äußerst aufwändig.

Trotz des betriebenen Aufwands hat es noch keine technische Lösung gegeben, mit der eine Fehlbedienung einer Mittelspannungsschaltanlage vollständig ausgeschlossen werden kann. So hat eine Bedienperson bei offenem Erdungsschalter und offenem Trenn-, Lasttrenn- bzw. Leistungsschalter die Möglichkeit, den Erdungsschalter oder den Trenn-, Lasttrenn- bzw. Leistungsschalter zu schalten. Wenn im Einspeisefeld der Mittelspannungsschaltanlage Spannung anliegt und die Bedienperson dies vor Betätigen des Erdungsschalters nicht kontrolliert, würde durch Schließen des Erdungsschalters ein dreipoliger Kurzschluss herbeigeführt werden. Daher bedarf es immer noch des technischen Sachverstands einer Bedienperson, jegliche Form der Fehlbedienung sicher auszuschließen. Dies steht im Widerspruch zu dem Bestreben, Mittelspannungsschaltanlagen zur Reduzierung von Kosten von weniger qualifizierten Bedienpersonen bedienen oder warten zu lassen.

Aus der WO 98/44610 A1 ist eine Schaltanlage mit einer Einrichtung zur Vermeidung einer fehlerhaften Schalterbetätigung bekannt, bei der zur Durchführung von Schalthandlungen eine elektronische Speicherkarte zur veränderbaren Speicherung von jede Schalthandlung automatisch auslösenden Steuerdaten in ein Kartenlesegerät der Schaltanlage einzuführen ist, wonach ein automatischer Ablauf der gewünschten Schalthandlungen anhand eines zuvor in die Speicherkarte eingespeicherten Schaltprogramms erfolgt.

Eine Schaltanlage mit den Merkmalen des Oberbegriffs des Anspruchs 1 ist durch den Einsatz einer Steuerungs- und Überwachungseinheit des Typs MiCOM C434 aus dem Jahr 2001 für Schaltanlagen bekannt.

Vor diesem Hintergrund liegen der vorliegenden Erfindung die Aufgaben zugrunde, die Bedienung von Schaltanlagen, insbesondere von Mittelspannungsschaltanlagen, zu vereinfachen, Möglichkeiten der Fehlbedienung zu reduzieren oder ganz auszuschließen und den hierfür benötigten technischen Aufwand zu verringern.

Diese Aufgabe wird mit einer Schaltanlage mit den Merkmalen des Anspruchs 1 gelöst. Vorteilhafte und insoweit bevorzugte Ausgestaltungen der Erfindungen ergeben sich aus den Unteransprüchen.

Erfindungsgemäß wird vorgeschlagen, die Schaltanlage, insbesondere Mittelspannungsschaltanlage, mit mindestens einem Betätiger zum Ein- und Ausschalten von mindestens einem Schalter, mit einer logischen Einrichtung zum Steuern des mindestens einen Betätigers sowie mit Bedienmitteln, die mit der logischen Einrichtung gekoppelt sind, zum Bedienen der Schaltanlage für eine Bedienperson vor Ort, zu versehen. Dabei weisen die Bedienmittel mindestens eine Anzeige zum Anzeigen eines Betriebszustands der Schaltanlage sowie Mittel für die Bedienperson zum Eingeben von Bedienungsbefehlen auf. Außerdem sind die Bedienmittel eingerichtet, der Bedienperson über die mindestens eine Anzeige in Abhängigkeit vom Betriebszustand ausschließlich erlaubte Bedienungsmöglichkeiten anzubieten und die Mittel zum Eingeben von Bedienungsbefehlen nur eine Aktivierung erlaubter Bedienungsbefehle zulassen. Schließlich ist die logische Einrichtung derart ausgebildet, dass sie den mindestens einen Betätiger entsprechend einer Auswahl eines Bedienungsbefehls durch die Bedienperson betätigt.

Unter einer logischen Einrichtung wird hier und im Folgenden insbesondere eine Steuereinrichtung mit einem oder mehreren integrierten Schaltkreisen, beispielsweise ein auf die Aufgaben der logischen Einrichtung angepasster Computer, verstanden.

Ein Grundgedanke der Erfindung besteht darin, Schalter einer Schaltanlage, wie beispielsweise Erdungsschalter, Trennschalter, Lasttrennschalter und/oder Leistungsschalter, nicht mehr wie bislang über Schaltkurbeln manuell zu betätigen, sondern hierfür Betätiger zu verwenden, die über eine logische Einrichtung gesteuert werden. Die logische Einrichtung ist mit Bedienmitteln gekoppelt, über die eine Bedienperson die Betätigung der Schalter durch Eingabe eines Bedienungsbefehls auslösen kann. Dabei ist die der Bedienperson zur Verfügung stehende Auswahl an Bedienungsbefehlen abhängig vom Betriebszustand der Schaltanlage, wodurch eine nicht erlaubte Betätigung von Schaltern sicher ausgeschlossen werden kann.

Damit wird die Betriebssicherheit von Schaltanlagen erheblich erhöht, und zwar selbst dann, wenn geringer qualifiziertes Bedienpersonal zur Bedienung oder Wartung einer erfindungsgemäßen Schaltanlage eingesetzt wird.

Es ist zweckmäßig und daher bevorzugt, dass die Bedienmittel zumindest teilweise an einer Außenwand der Schaltanlage angeordnet sind. So kann eine Bedienperson in einem Raum mit mehreren Schaltanlagen sicher sein, welche Schaltanlage sie gerade bedient. Zwingend ist dies allerdings nicht erforderlich. Es ist auch denkbar, dass die Bedienmittel als kleine Schaltzentrale zur Bedienung mehrerer Schaltanlagen im gleichen Raum ausgebildet sind.

In einer darüber hinaus bevorzugten Ausgestaltung der Erfindung umfassen die Bedienmittel einen Touchscreen, der gleichzeitig als Anzeige und als Mittel zur Eingabe von Bedienungsbefehlen dient. Natürlich ist es alternativ oder in Ergänzung hierzu auch möglich, einen herkömmlichen Monitor und Eingabemittel für eine Bedienperson, beispielsweise Mittel zur Bedienung eines auf der Anzeige gezeigten Mauszeigers zur Auswahl von Bedienungsbefehlen, vorzusehen. In diesem Zusammenhang ist es im Weiteren bevorzugt, wenn für jedes Schaltfeld einer Schaltanlage eine Anzeige vorgesehen ist.

Eine weniger bevorzugte Alternative besteht darin, die Funktionalität der Bedienmittel beispielsweise mit LEDs und Schaltern bereitzustellen, die beispielsweise an der Frontseite der Schaltanlage angeordnet sind. So kann beispielsweise für das Ein- und Ausschalten jedes Schalters jeweils ein Tastschalter vorgesehen sein, dem jeweils eine LED zugeordnet ist, wobei mit einer leuchtenden LED angezeigt wird, dass ein Schalter in einem bestimmten Betriebszustand der Schaltanlage für das Durchführen einer erlaubten Bedienmöglichkeit betätigt werden kann, und wobei nicht leuchtende LEDs darauf hinweisen, dass ein Schalter nicht aktiviert ist und seine Betätigung keine Betätigung eines Schalters zur Folge hat.

Noch eine Alternative besteht darin, dass die Anzeige Bestandteil eines mobilen Gerätes, beispielsweise eines Smärtphones oder eines Tablet-PCs ist, das über eine WLAN- oder Bluetooth-Schnittstelle oder eine andere Funkschnittstelle mit der logischen Einrichtung verbindbar ist und auf das die anzuzeigenden Daten von der logischen Einheit übertragen werden. Dabei ist denkbar, dass jedes Schaltfeld einer Schaltanlage mit einem Identifikationsmerkmal, beispielsweise einem ein- oder mehrdimensionalen Barcode, versehen ist, so dass das mobile Gerät das Identifikationsmerkmal aufnehmen und an die logische Einrichtung übermitteln kann und im Gegenzug von der logischen Einrichtung die für das Schaltfeld anzuzeigenden Informationen sowie die Anzeige von Bedienungselementen erhält. Auf diese Weise ist es möglich, dass eine Bedienperson die Schaltanlage mit einem mobilen Gerät bedient.

Je nach Anforderung kann erfindungsgemäß genau eine Anzeige für alle Schaltfelder einer Schaltanlage, aber auch jeweils eine Anzeige für einzelne oder jedes der Schaltfelder einer Schaltanlage vorgesehen sein. Entsprechendes gilt für die Mittel für die Bedienperson zum Eingeben von Bedienungsbefehlen.

In einer weiteren bevorzugten Ausgestaltung der Erfindung werden die Bedienungsmöglichkeiten und/oder der Betriebszustand der Schaltanlage auf der mindestens einen Anzeige in Form von Piktogrammen angezeigt. So lässt sich eine piktogrammartige Darstellung des Betriebszustands der Schaltanlage und der Bedienungsmöglichkeiten schneller und fehlerfreier erfassen als beispielsweise geschriebener Text.

Vorzugsweise weist die erfindungsgemäße Schaltanlage mindestens eine mit den Bedienmitteln gekoppelte Messeinrichtung auf, wobei von der mindestens einen Messeinrichtung ermittelte Messdaten bei der Anzeige des Betriebszustandes bzw. der Anzeige von Bedienungsmöglichkeiten berücksichtigt werden. Mit einer geeigneten Messeinrichtung kann beispielsweise bestimmt werden, ob im Einspeisefeld der Schaltanlage eine Spannung anliegt. Ist dies der Fall, darf der Erdungsschalter nicht eingeschaltet werden. In einem solchen Betriebszustand der Schaltanlage wird der Bedienperson demnach ein Bedienungsbefehl zum Einschalten des Erdungsschalters nicht angeboten.

Als Betätiger kommen insbesondere Elektromotoren einschließlich Stellmotoren, Magnetauslöser, Magnetschalter oder andere Mittel in Betracht, die geeignet sind, einen Schalter der Schaltanlage ein- und/oder auszuschalten.

Als Schalter kommen erfindungsgemäß unter anderem solche in Betracht, die einen Sprungantrieb aufweisen. Ein Sprungantrieb ist mit einem Energiespeicher, meist einem vorspannbaren Federelement, ausgestattet, und erlaubt ein schnelles Einschalten und/oder Ausschalten eines Schalters, um die Schaltvorgänge möglichst kurz zu halten. Ist der Energiespeicher geladen, im Falle eines Federelements also die Feder vorgespannt und beispielsweise das Entspannen der Feder durch eine Klinke gesperrt, reicht es zum Schalten eines solchen Schalters aus, wenn der Betätiger den Energiespeicher des Sprungantriebs entsprechend der Auswahl eines hierauf gerichteten Bedienungsbefehls freigibt. Der Betätiger schaltet demnach nicht den Schalter selbst, sondern gibt lediglich den für das Schalten des Schalters vorgesehenen Energiespeicher frei.

In einer weiteren vorteilhaften Ausführungsform der Erfindung ist vorgesehen, dass mindestens ein Schalter einen Sprungantrieb aufweist, und dass der mindestens eine Betätiger den Energiespeicher des Sprungantriebs entsprechend der Auswahl eines hierauf gerichteten Bedienungsbefehls lädt.

Wie bereits eingangs erwähnt, kommen als Schalter insbesondere Trenn-, Lasttrenn- oder Leistungsschalter sowie Erdungsschalter in Betracht.

Die erfindungsgemäßen Bedienmittel und die logische Einrichtung können außerdem dafür eingerichtet sein, den Zugang zur Schaltanlage zu ermöglichen oder zu sperren. Hierfür sind vorzugsweise Verriegelungsmittel zum Verriegeln eines Wartungszugangs zur Schaltanlage vorgesehen, die von der logischen Einrichtung in Abhängigkeit vom Betriebszustand oder der Auswahl eines hierauf gerichteten Bedienungsbefehls betätigbar sind. Ist die Schaltanlage beispielsweise nicht spannungsfrei geschaltet, wird der Bedienperson ein Bedienungsbefehl zum Öffnen von Blenden in der Gehäusewand der Schaltanlage nicht zur Auswahl angeboten. Solche Blenden können beispielsweise Kabelanschlussraumblenden oder Sicherungsblenden als Zugang zu Hochspannungssicherungen der Schaltanlage sein, die in nicht verriegeltem Zustand abgenommen oder geöffnet werden können und so den Zugang zu Bestandteilen der Schaltanalage freigeben.

Die Verriegelungsmittel können beispielsweise mindestens einen Elektromagneten umfassen, dessen Energiezufuhr über die logische Einrichtung gesteuert wird. Alternativ oder in Ergänzung hierzu können die Verriegelungsmittel mindestens einen Riegel aufweisen, der durch einen von der logischen Einrichtung gesteuerten Motor betätigbar ist.

Die logische Einrichtung der Schaltanlage muss ebenso wie die Bedienmittel mit Strom versorgt werden. Dies kann grundsätzlich beispielsweise über einen normalen Niederspannungsstromanschluss erfolgen. Bevorzugt ist allerdings eine vom Niederspannungsnetz unabhängige Stromversorgung. Daher ist eine erfindungsgemäße Schaltanlage zur Versorgung der logischen Einrichtung und der Bedienmittel vorzugsweise mit Eigenversorgungswandlern ausgestattet, die den benötigten Strom aus dem Mittelspannungsnetz beziehen.

Außerdem ist vorzugsweise eine auf einem Energiespeicher (z.B. Batterie, Akkumulator, Kondensatoren) basierende unterbrechungsfreie Stromversorgung vorgesehen, damit auch in den Fällen, in denen das Niederspannungsnetz oder das Mittelspannungsnetz gestört ist, ein Betätigen der Schaltanlage über die logische Einrichtung und die Bedienmittel möglich bleibt.

In noch einer bevorzugten Ausführungsform der Erfindung weist die Schaltanlage eine Datenschnittstelle auf, mit der die logische Einrichtung auch, beispielsweise von einer Fernwarte aus, fernbedienbar ist.

Nachfolgend wird die Erfindung anhand von Figuren, die eine bevorzugte Ausführungsform der Erfindung zeigen, näher erläutert.

Es zeigen
- Fig. 1: eine schematisierte Frontansicht einer erfindungsgemäßen Schaltanlage, und
- Fig. 2: eine Darstellung einer Anzeige der Bedienmittel der erfindungsgemäßen Schaltanlage.

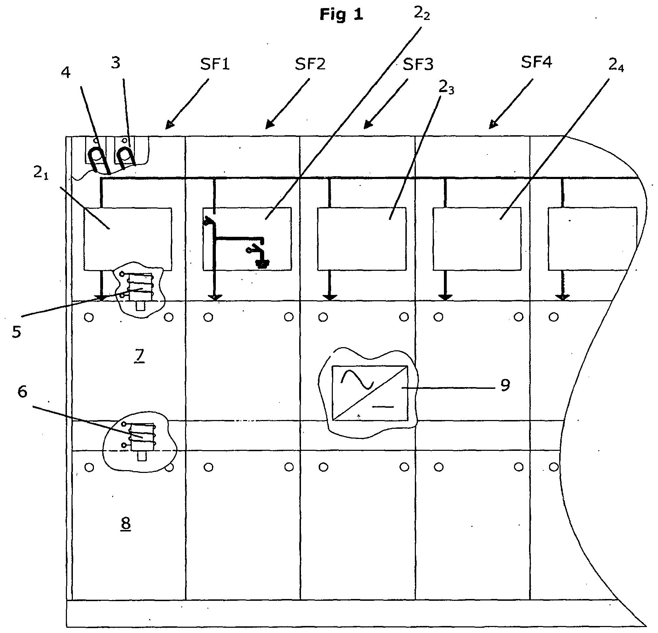

Die in Figur 1 dargestellte Schaltanlage weist mehrere Schaltfelder SF1, SF2, SF3, SF4 auf. Jedes dieser Schaltfelder weist an seiner Frontseite einen Touchscreen 2₁, 2₂, 2₃, 2₄, auf, die sämtlich über eine Datenleitung mit einer hier nicht dargestellten logischen Einrichtung verbunden sind. In der logischen Einrichtung werden verschiedene Betriebszustandsdaten der Schaltanlage gesammelt, und die logische Einrichtung sorgt dafür, dass auf jedem Touchscreen 2₁... die für das jeweilige Schaltfeld SF1... relevanten Betriebszustandsdaten angezeigt werden. Hierzu gehören insbesondere die Schalterstellungen der in dem Schaltfeld vorhandenen Schalter und/oder Informationen darüber, ob eine Sicherung ausgelöst wurde, ob ein Kurzschließer betätigt wurde, ob die Kabelzuführungen spannungsfrei sind, usw. Außerdem sind auf jedem Touchscreen virtuelle Schalter angeordnet, die von einer Bedienperson betätigt werden können, wobei nur solche Schalter betätigt werden können, deren Betätigung gemäß dem aktuellen Betriebszustand der Schaltanlage erlaubt sind.

Die logische Einrichtung steuert hier nur schematisch dargestellte Betätiger wie z.B. Stellmotoren 3, 4 zur Betätigung von hier nicht dargestellten Trenn-, Lasttrenn-, Leistungs- und/oder Erdungsschaltern. Die logische Einrichtung steuert auch die Betätigung von Verriegelungsmitteln 5,6 von Zugangsblenden 7, 8 der Schaltfelder SF1 ... beispielsweise für Kabelanschlussräume der Schaltanlage oder für die Elektronikbereiche eines Schaltfeldes. Als Verriegelungen kommen unter anderem Elektromagnete und mechanische Riegel in Betracht, wobei letztere auch elektromagnetisch angetrieben sein können.

Zur Versorgung der logischen Einrichtung und der Touchscreens 2₁ ... mit Strom weist die Schaltanlage einen Eigenversorgungswandler mit unterbrechungsfreier Stromversorgung 9 auf, um eine Sekundärspannung zur Verfügung zu stellen und bei Netzausfall bis zu einer definierten Zeit aufrecht zu erhalten.

Eine beispielhafte erfindungsgemäße Schaltanlage mit Erdungsschaltern und Lasttrennschaltern kann beispielsweise eingerichtet sein, um nach folgenden Regeln die Betätigung von Schaltern freizugeben:
Ist der Erdungsschalters offen und der Lasttrennschalter geschlossen, wird durch Deaktivierung des Bedienelements auf dem Display und durch eine elektrische Unterbrechung des Antriebs für den Erdungsschalter das Schalten des Erdungsschalters verhindert. Außerdem wird der Bedienperson angezeigt, dass als nächste Schalthandlung der Lasttrennschalter geöffnet werden muss. Das Bedienungselement auf der Anzeige ist hierzu aktiviert.

Sind sowohl der Erdungsschalter als auch der Lasttrennschalter offen, hat die Bedienperson nur dann die Möglichkeit, den Erdungsschalter zu schalten, wenn im Einspeisefeld der Schaltanlage keine Spannung anliegt. Liegt im Einspeisefeld der Schaltanlage eine Spannung an, hat die Bedienperson lediglich die Möglichkeit, den Lasttrennschalter zu schalten.

Sind der Erdungsschalter geschlossen und der Lasttrennschalter offen, sind das Bedienelement für den Lasttrennschalter auf der Anzeige deaktiviert und die elektrische Versorgung des Antriebes für den Lasttrennschalter unterbrochen, so dass das Schalten des Lasttrennschalters ausgeschlossen ist. Außerdem wird der Bedienperson angezeigt, dass als nächste Handlung der Erdungsschalter geöffnet werden muss. Das Bedienungselement auf der Anzeige ist hierzu aktiviert.

Hat eine Hochspannungssicherung der Schaltanlage ausgelöst, wird dies der Bedienperson grafisch angezeigt und anhand eines Textes mitgeteilt. Außerdem können Schritte zur weiteren Vorgehensweise auf der Anzeige erläutert werden.

Hat, beispielsweise bei Auftreten eines Störlichtbogens, ein Kurzschließer der Schaltanlage angesprochen, werden alle Bedienelemente auf der Anzeige deaktiviert und damit die Schaltanlage außer Betrieb gesetzt. Gleichzeitig wird das Auslösen des Kurzschließers auf der Anzeige anhand einer Grafik und in Textform mitgeteilt. Außerdem erhält die Bedienperson einen Hinweis, wie der Kundendienst zu kontaktieren ist.

Die erlaubten Schaltreihenfolgen sind normiert und dem Fachmann (nicht zwingend der Bedienperson) bekannt, auch für andere Schalterkombinationen mit Erdungsschaltern, Trennschaltern, Lasttrennschaltern und Leistungsschaltern. Die in einem Mittelspannungsnetz zu verwendenden Schatterkombinationen und Schalthandlungen werden zumeist vom Netzbetreiber festgelegt.

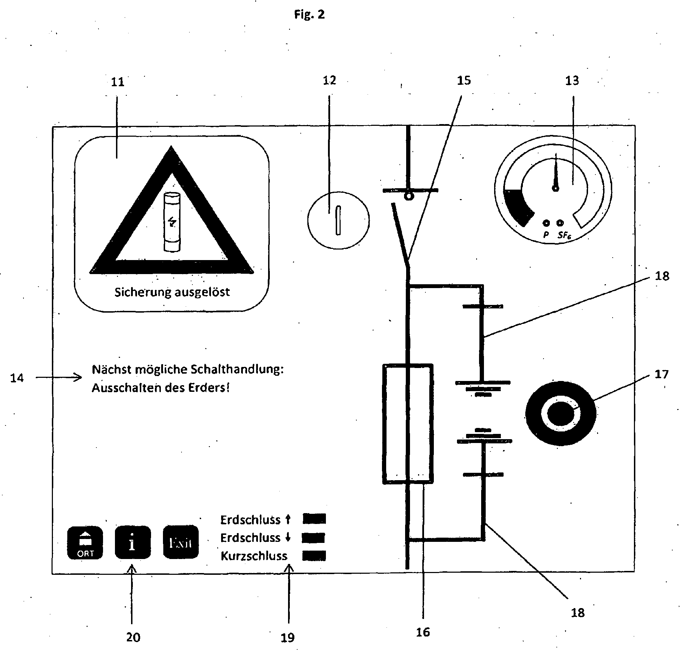

Die in Figur 2 dargestellte Anzeige eines Touchscreens gibt keinen realen Zustand wieder, sondern dient ausschließlich zur Erläuterung der Funktionalität der Erfindung. Die Anzeige weist folgende Anzeigeelemente auf:
11 - Eine grafische Anzeige zum Anzeigen, ob beispielsweise eine Sicherung ausgelöst hat oder ein Kurzschließer ausgelöst wurde
12- Bedienelement für einen Lasttrennschalter (oder Leistungsschalter); das Bedienelement ist hier "ausgegraut", um für eine Bedienperson darzustellen, dass diese Funktion in einem gegebenen Betriebszustand der Schaltanlage nicht anwählbar ist.
13 - Eine Anzeige des Fülldrucks von Isoliergas (SF₆) in der Schaltanlage
14 - Anzeige von nächsten möglichen Schalthandlungen im Klartext. Hier: "Ausschalten des Erders".
15 - Stellungsanzeige des Lasttrennschalters in Form eines Piktogramms.
16 - Stellungsanzeige der Sicherung (nur in der Touchscreenanzeige des Sicherungsfeldes der Schaltanlage).
17 - Bedienelement für den Erdungsschalter. Die Darstellung ist vorzugsweise farbig, um anzuzeigen, dass dies die oder eine mögliche nächste Schalthandlung ist.
18 - Stellungsanzeige des Erdungsschalters
19 - Anzeige von Kurz-/Erdschluss im Netzsystem und der Netzspannung
20 - Weitere Bedienelemente, wie z.B.
   - Anzeige einer Ort/Fern-Umschaltung zum Anzeigen, ob die Schaltanlage zu einem Zeitpunkt über eine Fernwarte bedient wird;
   - Info-Button zur Anzeige weiterer Informationen wie Klartextanzeige des Fülldruckes oder Anzahl der durchgeführten Schalthandlungen;
   - Exit-Button zum Beenden der Software oder zum Wechsel in verschiedenen Status/Fehlerprogramme, kann mit einer Passworteingabe verknüpft sein
   - Bedienelemente zum Freigeben und Verriegeln verschiedener Gehäuseblenden

Insbesondere durch das Anzeigen von Bedienelementen für die Schalter einer Schaltanlage als Piktogramme in grauer und farbiger Darstellung und/oder der Klartextanzeige ist es möglich, eine Bedienperson durch die von ihr durchzuführenden Handlungen zu führen und ihr selbst bei geringer Fachkenntnis ein fehlerfreies Arbeiten zu ermöglichen. Da zudem Betätiger zum Betätigen der Schalter der Schaltanlage eingesetzt werden, ist eine manuelle Betätigung der Schalter durch eine von außen eingesetzte Schaltkurbel weder notwendig noch möglich.

## Patentansprüche

1. Schaltanlage, insbesondere Mittelspannungsschaltanlage, mit mindestens einem Betätiger zum Ein- und Ausschalten von mindestens einem Schalter, mit einer logischen Einrichtung zum Steuern des mindestens einen Betätigers sowie mit Bedienmitteln, die mit der logischen Einrichtung gekoppelt sind, zum Bedienen der Schaltanlage für eine Bedienperson vor Ort, wobei die Bedienmittel mindestens eine Anzeige(11, 13, 15, 16, 18, 19, 20) zum Anzeigen eines Betriebszustand der Schaltanlage sowie Mittel (12, 17, 20) für die Bedienperson zum Eingeben von Bedienungsbefehlen aufweisen, wobei die logische Einrichtung derart ausgebildet ist, dass sie den mindestens einen Betätiger entsprechend einer Auswahl eines Bedienungsbefehls durch die Bedienperson betätigt, **dadurch gekennzeichnet, dass** die Bedienmittel eingerichtet sind, der Bedienperson über die mindestens eine Anzeige in Abhängigkeit vom Betriebszustand ausschließlich erlaubte Bedienungsmöglichkeiten anzubieten und die Mittel (12, 14, 17, 20) zum Eingeben von Bedienungsbefehlen nur eine Aktivierung erlaubter Bedienungsbefehle zulassen.

2. Schaltanlage nach Anspruch 1, **dadurch gekennzeichnet, dass** die Bedienmittel zumindest teilweise an einer Außenwand der Schaltanlage angeordnet sind.

3. Schaltanlage nach Anspruch 1 oder 2, **dadurch gekennzeichnet, dass** die Bedienmittel einen Touchscreen (2₁, 2₂, 2₃, 2₄) als Anzeige und als Mittel zur Eingabe von Bedienungsbefehlen umfassen.

4. Schaltanlage nach einem der vorstehenden Ansprüche, **gekennzeichnet durch** jeweils eine Anzeige für jedes Schaltfeld (SF1, SF2, SF3, SF4) der Schaltanlage.

5. Schaltanlage nach einem der vorstehenden Ansprüche, dass die Bedienungsmittel eingerichtet sind, die Bedienungsmöglichkeiten und/oder den Betriebszustand der Schaltanlage auf der mindestens einen Anzeige in Form von Piktogrammen anzuzeigen.

6. Schaltanlage nach einem der vorstehenden Ansprüche, **gekennzeichnet durch** mindestens eine mit den Bedienmitteln gekoppelte Messeinrichtung, wobei von der mindestens einen Messeinrichtung ermittelte Messdaten bei der Anzeige des Betriebszustandes bzw. der Anzeige von Bedienungsmöglichkeiten berücksichtigt werden.

7. Schaltanlage nach einem der vorstehenden Ansprüche, **gekennzeichnet durch** als Betätiger verwendete Elektromotoren, die insbesondere als Stellmotoren (3,4) ausgebildet sein können, Magnetauslöser und/oder Magnetschalter.

8. Schaltanlage nach einem der vorstehenden Ansprüche, **dadurch gekennzeichnet, dass** der mindestens eine Schalter einen Sprungantrieb aufweist, und der mindestens eine Betätiger den Energiespeicher des Sprungantriebs entsprechend der Auswahl eines hierauf gerichteten Bedienungsbefehls freigibt.

9. Schaltanlage nach einem der vorstehenden Ansprüche, **dadurch gekennzeichnet, dass** mindestens ein Schalter einen Sprungantrieb aufweist, und der mindestens eine Betätiger den Energiespeicher des Sprungäntriebs entsprechend der Auswahl eines hierauf gerichteten Bedienungsbefehls lädt.

10. Schaltanlage nach einem der vorstehenden Ansprüche, **dadurch gekennzeichnet, dass** als Schalter ein Trenn-, Lasttrenn- und/oder Leistungsschalter und/oder ein Erdungsschalter vorgesehen ist.

11. Schaltanlage nach einem der vorstehenden Ansprüche, **gekennzeichnet durch** Verriegelungsmittel (5, 6) zum Verriegeln eines Wartungszugangs zum Schaltschrank, die von der logischen Einrichtung in Abhängigkeit vom Betriebszustand oder der Auswahl eines hierauf gerichteten Bedienungsbefehls betätigbar sind.

12. Schaltanlage nach Anspruch 11, **dadurch gekennzeichnet, dass** die Verriegelungsmittel (5, 6) mindestens einen Elektromagneten umfassen, dessen Energiezufuhr über die logische Einrichtung gesteuert wird.

13. Schaltanlage nach Anspruch 11 oder 12, **dadurch gekennzeichnet, dass** die Verriegelungsmittel (5, 6) mindestens einen Riegel aufweisen, der durch einen von der logischen Einrichtung gesteuerten Motor betätigbar ist.

14. Schaltanlage nach einem der vorstehenden Ansprüche, **gekennzeichnet durch** Eigenversorgungswandler (9) zur Versorgung der logischen Einrichtung und der Bedienmittel mit Strom aus dem Mittelspannungsnetz.

15. Schaltanlage nach einem der vorstehenden Ansprüche, **gekennzeichnet durch** eine auf einem Energiespeicher basierende unterbrechungsfreie Stromversorgung.

16. Schaltanlage nach einem der vorstehenden Ansprüche, **gekennzeichnet durch** eine Datenschnittstelle, mit der die logische Einrichtung auch fernbedienbar ist.

17. Schaltanlage nach einem der vorstehenden Ansprüche, **dadurch gekennzeichnet, dass** sie eine Mittelspannungsschaltanlage ist.

## Claims

1. Switchgear, in particular medium-voltage switchgear, with at least one actuator for switching at least one switch on and off, with a logic device for controlling the at least one actuator as well as with operating means that are coupled to the logic device, for operating the switchgear for an operator *in situ,* wherein the operating means comprise at least one display (11, 13, 15, 16, 18, 19, 20) for displaying an operating state of the switchgear and also means (12, 17, 20) for the operator for inputting operating commands, wherein the logic device is configured so that it actuates the at least one actuator corresponding to a selection of an operating command by the operator, **characterised in that** that the operating means are configured to offer the operator exclusively permitted operating possibilities via the at least one display depending on the operating state, and the means (12, 14, 17, 20) for inputting operating commands allow only an activation of permitted operating commands.

2. Switchgear according to Claim 1, **characterised in that** the operating means are arranged at least partly on an outer wall of the switchgear.

3. Switchgear according to Claim 1 or 2, **characterised in that** the operating means include a touchscreen (2₁, 2₂, 2₃, 2₄) as a display and as means for inputting operating commands.

4. Switchgear according to any one of the preceding claims, **characterised by** respectively a display for each switching field (SF1, SF2, SF3, SF4) of the switchgear.

5. Switchgear according to any one of the preceding claims, **characterised in that** the operating means are configured to display the operating possibilities and/or the operating state of the switchgear in the form of pictograms on the at least one display.

6. Switchgear according to any one of the preceding claims, **characterised by** at least one measuring device coupled to the operating means, wherein measurement data determined by the at least one measuring device are taken into account in the display of the operating state and/or of the display of operating possibilities.

7. Switchgear according to any one of the preceding claims, **characterised by** electric motors used as actuators, which in particular may be configured as servomotors (3, 4), magnetic triggers and/or magnetic switches.

8. Switchgear according to any one of the preceding claims, **characterised in that** the at least one switch has a spring mechanism, and the at least one actuator releases the stored energy of the spring mechanism corresponding to the selection of an operating command directed thereto.

9. Switchgear according to any one of the preceding claims, **characterised in that** at least one switch has a spring mechanism, and the at least one actuator charges the energy store of the spring mechanism corresponding to the selection of an operating command directed thereto.

10. Switchgear according to any one of the preceding claims, **characterised in that** a disconnector, load-breaker break switch and/or circuit breaker and/or an earthing switch is provided as switch.

11. Switchgear according to any one of the preceding claims, **characterised by** locking means (5, 6) for locking a service access to the switchgear, which can be actuated by the logic device depending on the operating state or the selection of an operating command directed thereto.

12. Switchgear according to Claim 11, **characterised in that** the locking means (5, 6) include at least an electromagnet, whose energy supply is controlled via the logic device.

13. Switchgear according to Claim 11 or 12, **characterised in that** the locking means (5, 6) comprise at least one bolt, which can be actuated by a motor controlled by the logic device.

14. Switchgear according to any one of the preceding claims, **characterised by** self-sufficiency converters (9) for supplying the logic device and the operating means with current from the medium-voltage network.

15. Switchgear according to any one of the preceding claims, **characterised by** an interruption-free power supply based on an energy store.

16. Switchgear according to any one of the preceding claims, **characterised by** a data interface that can also be remotely operated with the logic device.

17. Switchgear according to any one of the preceding claims, **characterised in that** it is a medium-voltage switchgear.

## Revendications

1. Installation de distribution, en particulier installation de distribution à moyenne tension, comprenant au moins un actionneur pour enclencher et déclencher au moins un commutateur, un dispositif logique pour commander ledit au moins un actionneur ainsi que des moyens de commande qui sont couplés au dispositif logique pour la commande de l'installation de distribution par un opérateur sur place, les moyens de commande comportant au moins un affichage (11, 13, 15, 16, 18, 19, 20) pour afficher un état de fonctionnement de l'installation de distribution ainsi que des moyens (12, 17, 20) permettant à l'opérateur d'entrer des instructions de commande, le dispositif logique est conçu de telle sorte qu'il actionne ledit au moins un actionneur en fonction d'une sélection d'une instruction de commande par l'opérateur, **caractérisée en ce que** les moyens de commande sont conçus pour proposer à l'opérateur, par l'intermédiaire dudit au moins un affichage, uniquement des possibilités de commande autorisées en fonction de l'état de fonctionnement et pour permettre aux moyens (12, 14, 17, 20) d'entrée d'instructions de commande d'activer uniquement les instructions de commande autorisées.

2. Installation de distribution selon la revendication 1, **caractérisée en ce que** les moyens de commande sont disposés au moins en partie sur une paroi extérieure de l'installation de distribution.

3. Installation de distribution selon la revendication 1 ou la revendication 2, **caractérisée en ce que** les moyens de commande comprennent un écran tactile (2₁, 2₂, 2₃, 2₄) en tant qu'affichage et en tant que moyen d'entrée d'instructions de commande.

4. Installation de distribution selon l'une des revendications précédentes, **caractérisée par** un affichage pour chaque tableau de distribution (SF1, SF2, SF3, SF4) de l'installation de distribution.

5. Installation de distribution selon l'une des revendications précédentes, **caractérisée en ce que** les moyens de commande sont conçus pour afficher les possibilités de commande et/ou l'état de fonctionnement de l'installation de distribution sur ledit au moins un affichage sous la forme de pictogrammes.

6. Installation de distribution selon l'une des revendications précédentes, **caractérisée par** au moins un dispositif de mesure couplé aux moyens de commande, les données de mesure déterminées par ledit au moins un dispositif de mesure étant prises en considération lors de l'affichage de l'état de fonctionnement et/ou de l'affichage des possibilités de commande.

7. Installation de distribution selon l'une des revendications précédentes, **caractérisé par** des moteurs électriques, qui peuvent en particulier être réalisés sous la forme de servomoteurs (3, 4), des déclencheurs magnétiques et/ou des commutateurs magnétiques utilisés en tant qu'actionneurs.

8. Installation de distribution selon l'une des revendications précédentes, **caractérisée en ce que** ledit au moins un commutateur présente un mécanisme à action brusque, et ledit au moins un actionneur libère l'accumulateur d'énergie du mécanisme à action brusque en fonction de la sélection d'une instruction de commande en ce sens.

9. Installation de distribution selon l'une des revendications précédentes, **caractérisée en ce qu'**au moins un commutateur présente un mécanisme à action brusque, et ledit au moins un actionneur charge l'accumulateur d'énergie du mécanisme à action brusque en fonction de la sélection d'une instruction de commande en ce sens.

10. Installation de distribution selon l'une des revendications précédentes, **caractérisée en ce qu'**un sectionneur, un interrupteur-sectionneur et/ou un disjoncteur et/ou un sectionneur de terre est prévu en tant que commutateur.

11. Installation de distribution selon l'une des revendications précédentes, **caractérisée par** des moyens de verrouillage (5, 6) pour verrouiller un accès de maintenance à l'armoire de distribution, qui peuvent être actionnés par le dispositif logique en fonction de l'état de fonctionnement ou de la sélection d'une instruction de commande en ce sens.

12. Installation de distribution selon la revendication 11, **caractérisée en ce que** les moyens de verrouillage (5, 6) comprennent au moins un électroaimant dont l'alimentation en énergie est commandée par le dispositif logique.

13. Installation de distribution selon la revendication 11 ou la revendication 12, **caractérisée en ce que** les moyens de verrouillage (5, 6) présentent au moins un verrou qui peut être actionné par un moteur commandé par le dispositif logique.

14. Installation de distribution selon l'une des revendications précédentes, **caractérisée par** des convertisseurs d'alimentation internes (9) pour alimenter le dispositif logique et les moyens de commande en courant à partir du réseau à moyenne tension.

15. Installation de distribution selon l'une des revendications précédentes, **caractérisée par** une alimentation électrique sans interruption basée sur un accumulateur d'énergie.

16. Installation de distribution selon l'une des revendications précédentes, **caractérisée par** une interface de données au moyen de laquelle le dispositif logique peut aussi être commandé à distance.

17. Installation de distribution selon l'une des revendications précédentes, **caractérisée en ce qu'**il s'agit d'une installation de distribution à moyenne tension.
